# EUROPÄISCHE PATENTSCHRIFT

(11) **EP 2 263 102 B1**
(45) Veröffentlichungstag und Bekanntmachung des Hinweises auf die Patenterteilung: **28.08.2013**
(21) Anmeldenummer: 08873092.4
(22) Anmeldetag: 12.11.2008
(51) Int. Cl.: G01S 7/00, G01S 15/87, G01S 15/93, H04L 29/12

(54) **ULTRASCHALLBASIERTES FAHRERASSISTENZSYSTEM**
ULTRASOUND-BASED DRIVER ASSISTANCE SYSTEM
SYSTÈME D ASSISTANCE AU CONDUCTEUR À BASE D ULTRASONS

(30) Priorität: 07.03.2008 DE 102008000570
(43) Veröffentlichungstag der Anmeldung: 22.12.2010
(73) Patentinhaber: Robert Bosch GmbH, 70442 Stuttgart (DE)
(72) Erfinder: SEITER, Michael, 71735 Eberdingen-hochdorf (DE); WALKER, Thomas, 72127 Kusterdingen (DE); KLOTZ, Albrecht, 72631 Aichtal (DE); TREPTOW, Thomas, 71229 Leonberg (DE); HERING, Michael, 71229 Leonberg (DE); SCHMID, Dirk, 75397 Simmozheim (DE); OHL, Christian, 72793 Pfullingen (DE); GERLACH, Michael, 71263 Weil Der Stadt (DE); RAPPS, Peter, 76227 Karlsruhe (DE); HERDER, Bjoern, 70469 Stuttgart (DE)
(86) Internationale Anmeldenummer: PCT/EP2008/065404
(87) Internationale Veröffentlichungsnummer: WO 2009/109243

(56) Entgegenhaltungen:
- EP-A- 1 619 518
- EP-A2- 0 386 659
- DE-A1- 3 540 704
- FR-A1- 2 823 390
- US-A- 5 229 975
- US-A1- 2003 034 883
- US-A1- 2004 189 452

## Beschreibung

Die Erfindung betrifft einen Sensor insbesondere für ein ultraschallbasiertes Fahrerassistenzsystem für Kraftfahrzeuge, wie eine Einparkhilfe, nach dem Oberbegriff des Anspruch 1. Die Erfindung betrifft ebenfalls ein Fahrerassistenzsystem mit einem solchen Ultra-schallsensor und Verfahren zur Initialisierung solcher Systeme.

### Stand der Technik

Derartige ultraschallbasierten Fahrerassistenzsysteme für Kraftfahrzeuge sind seit langem als Einparkhilfen, zur Parklückenvermessung oder zur Ausleuchtung toter Winkel bekannt, beispielsweise aus der DE 102 06 764 A1. Dabei senden die Sensoren Schallimpulse im Ultraschallbereich aus und fangen die von Hindernissen reflektierten Signale auf. Typischerweise umfassen solche Systeme zwei bis sechs baugleicher Sensoren pro Stoßfänger, die mit einem entsprechenden Steuergerät jeweils über eine Punkt-zu-Punkt Verbindung kommunizieren. Vermittels dieser Punkt-zu-Punkt Verbindungen, über die auch die logische und geographische Adressierung der Sensoren erfolgt, werden entweder analoge Rohsignale oder vorverarbeitete Daten über eine herstellerspezifische proprietäre Schnittstelle übertragen.

Um insbesondere eine genaue Abstandsberechnung durchführen oder ein Display mit lateraler Auflösung ansteuern zu können, ist es notwendig, den Einbauort eines jeden Sensors im Stoßfänger zu kennen. Nur so können die Sensoren vom Steuergerät individuell angesteuert und die Signale der Sensoren, insbesondere die empfangenen Echos, eindeutig einer fahrzeugbezogenen Position im Stoßfänger zugeordnet werden. Diese individuelle Zuordnung der Sensoren im Rahmen einer Initialisierung ist derzeit mit einem relativ hohen Montage- und Programmieraufwand verbunden.

In der Patenschrift US 5229975 A wird ein Fahrzeugassistenzsystem beschrieben, dass mehrere Sensormodule über einen Datenbus miteinander verbindet. Die verwendeten Sensoren sind unter anderem ultraschallbasiert und weisen eine Sender- und eine Empfängereinheit auf. Die Sensoren sind mit einem auslesbaren EEPROM ausgestattet und weisen einen individuellen Identifikationscode auf, der über die Schnittstelle vom Steuergerät auslesbar ist.

In der Offenlegungsschrift US 2003/0034883 A1 wird ein Fahrzeugassistenzsystem mit mehreren Ultraschallsensoren, die an vorbestimmten Positionen eines Fahrzeugs verbaut sind, zur Erkennung von Hindernissen beschrieben. Jeder Sensor besitzt die Fähigkeit aus den aufgenommenen Messwerten die Entfernung zwischen einem Objekt und dem Fahrzeug zu berechnen. Diese Informationen werden dann über eine Kontrolleinheit weitergeleitet.

In der Offenlegungsschrift DE 3540704 A1 wird eine Einrichtung zur Abstandsmessung beschrieben. Dabei werden mehrere Wandler zum Senden und Empfangen von Ultraschallsignalen zeitversetzt aktiviert und in Abhängigkeit vom Auftreten eines Objekts in der Nähe eines Sensors, wird dieser im Meßzyklus mehrmals angesteuert.

### Aufgabe und Vorteile der Erfindung

Die Aufgabe der Erfindung besteht zunächst darin, einen Sensor zu schaffen, der eine einfache Initialisierung und eine komfortable Ansteuerung mit üblichen Programmfunktionen ermöglicht. Zudem ist es Aufgabe der Erfindung ein Fahrerassistenzsystem zu schaffen, das mit solchen Sensoren ausgestattet ist. Zudem werden einfache Verfahrensweisen zur Initialisierung der Systeme respektive der im System verbauten Sensoren vorgeschlagen.

Diese Aufgaben werden durch ein System mit den kennzeichnenden Merkmalen des Anspruchs 1 und einem Verfahren nach Anspruch 6 gelöst. In den jeweiligen Unteransprüchen sind vorteilhafte Ausführungsformen genannt.

Ein wesentlicher Grundgedanke, auf dem die Erfindung aufbaut, liegt in dem auslesbaren Permanentdatenspeicher, der im Sensor integriert ist und in dem ein individueller Identifikationscode gespeichert ist. Dieser dem Sensor eigene Code kann als eineindeutige Sensor-Seriennummer respektive als Sensor-ID in einer Zeichenfolge von beispielsweise 32 - 48 Bit in einem als elektrisch löschbaren und programmierbaren Nur-Lesespeicher (EEPROM) des Sensors hinterlegt sein, wobei der EEPROM idealerweise schon bei der Herstellung durch das Einspeichern des identifikationscode vorkonfektioniert wurde.

Erfindungsgemäß bildet der Sensor zudem eine Schnittstelle, die für die Kommunikation mit mehreren anderen System-Komponenten, in diesem Fall mit anderen gleichartigen Sensoren und mit dem Steuergerät, geeignet ist. Diese Schnittstelle unterstützt somit eine Kommunikation über einen "Datenbus" mit anderen Busteilnehmern. Insbesondere lässt sich über diese "Bus-Schnittstelle" der Identifikationscode eines jeden der angeschlossenen Sensoren mittels des ebenfalls über den Bus kommunizierenden Steuergerätes auslesen. Dabei lässt sich ein Sensor ebenso wie das Steuergerät als Busteilnehmer ansteuern, wobei er mit den anderen Sensoren die Funktion eines Slave und das Steuergerät die des Masters inne haben kann.

Dabei wird die Kommunikation über den Bus und insbesondere die Initialisierung der einzelnen Sensoren durch den jeweils im Permanentdatenspeicher hinterlegten individuellen Identifikationscode begünstigt. Diese erfindungsgemäße Ausstattung der Sensoren erlaubt die besonders einfache Erkennung und logische Adressierung der Sensoren im Bussystem. Entsprechende Verfahren zur Adressierung insbesondere zur Initialisierung werden später beschrieben. Ein großer Vorteil der erfindungsgemäßen Sensoren und der damit möglichen Kommunikation liegt zunächst darin, dass auf die Punkt zu Punkt Verbindung, die mit hohem Material- und Verschaltungsaufwand einhergeht, verzichtet werden kann. Dadurch werden die mit derartigen Sensoren bestückten Systeme kostengünstiger und robuster. Auch der Austausch einzelner Sensoren ist bequem möglich, was die Wartungsfreundlichkeit der Systeme signifikant erhöht.

Wie schon gesagt, lassen sich die erfindungsgemäßen Grundgedanken besonders vorteilhaft in für ein ultraschallbasierten Fahrerassistenzsystemen für Kraftfahrzeuge, wie eine insbesondere in Einparkhilfen, einsetzen. Ein solcher Sensor hat eine Sende-/ Empfangseinheit zur Messung des Abstandes zu einem Hindernis vermittels des Sendens und Empfangens eines Ultraschallsignals. Dennoch kann die Erfindung auch für andere Umfeldsensorik-Systeme genutzt werden, solange diese insbesondere mit einer Bruttodatenrate von weniger als etwa 189kBaud auskommen.

Dabei sind ähnliche Schnittstellen und Bussysteme aus anderen Anwendungen, beispielsweise von der Steuerung von Airbags, bekannt und, wie beispielsweise das PSI5 ("Peripheral Sensor Interface", siehe unter http://www.psi5.org), standardisiert. Diese taugen jedoch nur bei entsprechender Modifikation für den Einsatz der hier zur Debatte stehenden Sensoren.

Da an die aus diesem Bereich bekannten Systeme maximal vier Sensoren über die Zwei-Draht Verbindung angeschlossen werden können, sind zunächst für sechs oder mehr Sensoren pro Stoßfängerseite zwei synchronisierte, dem PSI 5 ähnliche Systeme erforderlich. Wegen der 2-Draht Verbindung ist zudem im Sensor eine lokale Energieressource zur Pufferung Sendeströme vorzusehen. Vorteilhafterweise wird dafür ein Pufferkondensator eingesetzt, der mithilfe der "Sync"-Pulse nach dem PSI Protokoll zwischen zwei Sendepulsen aufgeladen werden kann.

Es ist aber vorteilhaft, eine solche 2-Draht Verbindung, wie den PSI-Bus, derart zu erweitern, dass mehr als die maximal vier Sensoren an den Bus angeschlossen und betrieben werden können. Dazu wird in einer besonderen Ausführungsform der Erfindung eine weitere Leitung eingeführt, die es ermöglicht, die Stromversorgung der Sensoren von der Datenübertragung zu trennen. Ein besonderer Vorteil dieser Erweiterung ist die Möglichkeit, dass die logische und geographische Adressierung der Sensoren auch ohne "daisy-chain" durchgeführt werden kann. Es ist also kein Zusatzpin im Sensor erforderlich. Zudem können baugleiche Sensoren, die sich lediglich in ihrer eindeutigen internen Adresse oder Serien-Nummer unterscheiden, verwendet werden. Ein solcher auf drei Leitungen aufbauender Bus macht es auch möglich, das Datenprotokoll beispielsweise hinsichtlich der Bitbreiten und eines erweiterten Halbduplex-Modus zu optimieren.

Die Erweiterung des Halbduplex-Modus kann darin bestehen, statt der definierten zeitlichen Reihenfolge der "Sync"-Pulse einen Sonderbetriebsmodus zu definieren, in dem die "Sync"-Pulse innerhalb eines "Datenframes" in kurzen Abständen gesendet und als "Sync"-Datenpulse zur schnellen Datenübertragung vom Steuergerät zum Sensor benutzt werden können. Die Anwesenheit eines "Sync"-Datenpulses kann die logische "1", das Auslassen eines "Sync"-Datenpulses die logische "0" definieren. Dieser Sonderbetriebsmodus kann durch einen entsprechenden Befehl über die "Sync"-Pulse im Standardbetriebsmodus aktiviert werden und ist für den unmittelbar anschließenden Datenframe nach Sync-Puls Befehlsende gültig.

Der Vorteil der erfindungsgemäßen Vorgehensweise liegt in der Einsparung von Leitungen im Kabelbaum. Je nach Systemkonfiguration können damit bis zu fünf Datenleitungen zu den Sensoren pro Stoßfänger eingespart werden. Außerdem ist, wie schon gesagt, eine logische und geographische Adressierung auch ohne daisy-chain möglich. Auch haben die auf der Erfindung aufbauenden Bus-Systeme das Potential zur Standardisierung.

### Ausführungsbeispiele

Die Grundidee der logischen und auch der positionsbezogenen Adressierung der Sensoren liegt in einer Adressierungssequenz durch eine bestimmte Form der Busarbitrierung unter gezielter Abfrage der im System verbauten Seriennummern. Nachfolgend werden zwei Verfahren zur logische Adressierung der Sensoren im Bussystem vorgestellt. Dabei bedient sich ein erstes Verfahren der logischen Adressierung einzelner Busteilnehmer durch ein sukzessives Abfragen der Identifikationscodes. Das zweite Verfahren bedient sich der Adressierung von Busteilnehmern durch ein zeitversetztes Anschließen an das Bussystem. Diese Verfahren stellen sicher, dass die Sensoren individuell vom Steuergerät angesteuert und die Information der Sensoren, insbesondere empfangene Echos, eindeutig einer Position im Stoßfänger zugeordnet werden können, damit beispielsweise eine genaue Abstandsberechnung durchgeführt oder ein Display mit lateraler Auflösung angesteuert werden kann. Dabei muss der jeweilige Identifikationscode der im Sensorbus verbauten Sensoren nicht bekannt sein. Auch müssen die insbesondere über eine Stromschnittstelle an den Bus angeschlossenen Sensoren den Status des Busses nicht detektieren können. Ein Vorteil der erfindungsgemäßen Vorgehensweise ist die automatische Erkennung der Busteilnehmer sowohl bei erster Inbetriebnahme als auch im Reparaturfall.

Ganz generell besteht eine Einparkhilfe aus einem elektronischen Steuergerät, das optional beispielsweise über CAN an Fahrzeugsignale angeschlossen sein kann, und den Ultraschallsensoren, die über einen oder mehrere Sensorbusse mit dem Steuergerät verbunden sind. Das Steuergerät ist der Bus-Master und die Sensoren die Slaves. Senden mehrere Slaves gleichzeitig muss der Master in der Lage sein, zu erkennen, ob mindestens ein Slave sendet. Auf die zu beschreibende Weise ist eine logische Adressierung der Sensoren im Sensorbus bei Bussystemen, wie dem PSI-Bus, in dem die Sensoren den Pegel-Wert des Busses nicht detektieren können, möglich. Dabei erhält jeder Sensor bei seiner Produktion eine eindeutige Adresse, den Identifikationscode, beispielsweise als 48 Bit-Wert, die das Steuergerät über den Sensorbus auslesen kann. Vor Einbau in einen Fahrzeugbus beinhaltet jeder Sensor eine ungültige logische ID. Da nicht bekannt ist, welche und wie viele Sensoren im System verbaut sind, muss die Anzahl und die eindeutige Adresse der verbauten Sensoren ermittelt werden.

Die logische Slave-ID wird während einer Initialisierungsphase vom Bus-Master vergeben. Dabei ist es unerheblich, ob jeder Slave nach Power-Up seine logische ID erneut zugewiesen bekommen muss oder ob dies für jeden Slave einmalig erfolgt und die logische ID im Slave gespeichert wird. Sobald ein Slave eine gültige logische ID besitzt, sendet er im Initialisierungsmodus nicht länger. In anderen Kommunikationsmodi ist der Sensor in der Lage seine eindeutige Seriennummer zu kommunizieren.

In jedem der vier nachfolgenden Varianten des ersten Verfahrens versetzt der Bus-Master, also das Steuergerät, alle Slave-Teilnehmer, also Sensoren, per Befehl zunächst in den Initialisierungsmodus und sendet dann eine Variable, beispielsweise "SerNr", einer bestimmten Länge an alle Slaves.

In einer ersten Variante sendet der Master als "SerNr" eine Bitkombination der Länge n an alle Slaves, wobei im ersten Durchlauf n = 1 ist. Geprüft wird, inwieweit die n "least signifikant bits" der Seriennummern der Slaves mit der vom Master gesendeten Bitkombination übereinstimmen. Wenn kein Slave antwortet, so wird das Bit n in "SerNr" invertiert. Auch wenn mehrere Slaves antworten, werden die Schritte mit n = n + 1 wiederholt. Wenn irgendwann nur ein Slave antwortet, kann diesem Sensor eine eindeutige logische Adresse zugewiesen werden. Nach maximal m Iterationen (m = Länge der eindeutigen Sensor-Seriennummern) ist jeder Slave eindeutig identifiziert und der Master konnte jedem seine logische Adresse zuweisen.

In einer zweiten Variante sendet der Master als "SerNr" eine Bitkombination der Länge m an alle Slaves, wobei m die Länge der eindeutigen Sensor-Seriennummern ist, zusammen mit einer Maske, welche die Anzahl der n-least signifikant Bits repräsentiert, die für den Vergleich mit den Sensor-Seriennummern herangezogen werden. Im ersten Durchlauf ist n = 1. Alle Slaves, deren Seriennummer in den n-least signifikant Bits mit der vom Master gesendeten Bitkombination übereinstimmen, antworten. Antwortet kein Slave, so wird das Bit n in "SerNr" invertiert. Die Schritte werden mit inkrementierter Maske wiederholt. Nach maximal m Iterationen ist jeder Slave eindeutig identifiziert, so dass der Master ihm eine logische Adresse zuweisen kann.

Entsprechend einer dritten Variante sendet der Master eine Bitkombination "SerNr" der Länge n, wobei im ersten Durchlauf n = k, wobei k = 1,2 ... Anzahl Bits der Sensor-Seriennummer gewählt werden kann. Alle Slaves, deren Seriennummer in den n-least signifikant bits mit der vom Master gesendeten Bitkombination übereinstimmen, antworten. Antwortet kein Slave, so wird die Bitkombination "SerNr" modifiziert. Die Schritte werden wiederholt, bis mindestens ein Slave antwortet oder alle Bitkombinationen innerhalb (n-k)... n Bits abgefragt wurden. Die Schritte werden mit "SerNr." der Länge n = n+k wiederholt. Dabei sind so viele Iterationen nötig, bis eine bekannte Anzahl Sensoren über eine minimale Anzahl least-signifikanter Bits eindeutig unterscheidbar sind. Die Zuweisung einer logischen ID kann über die Adressierung mittels dieser minimalen Anzahl von least signifikant Bits erfolgen.

In einer vierten Variante sendet der Master eine Bitkombination "SerNr" der Länge m an alle Slaves, wobei m die Länge der eindeutigen Sensor-Seriennummern ist. Zudem sendet er eine Maske, welche die Anzahl der n-least signifikant Bits repräsentiert, welche für den Vergleich mit den Sensor-Seriennummern herangezogen werden. Im ersten Durchlauf ist n = k (k frei wählbar zwischen 1,2 ... Anzahl Bits der Sensor-Seriennummer). Alle Slaves, deren Seriennummer in den n-least signifikant bits mit der vom Master gesendeten Bitkombination übereinstimmen, antworten. Antwortet kein Slave, so wird die Bitkombination "SerNr" modifiziert und die Schritte wiederholt, bis mindestens ein Slave antwortet oder alle Bitkombinationen innerhalb (n-k)... n Bits abgefragt wurden. Es sind nur so viele Iterationen notwendig bis eine bekannte Anzahl Sensoren über eine minimale Anzahl leastsignifikanter Bits eindeutig unterscheidbar sind. Die Zuweisung einer logischen ID kann über die Adressierung mittels dieser minimalen Anzahl von least signifikant Bits erfolgen. Für die Varianten drei und vier können innerhalb einer Schleife eine einzige Seriennummer aber mehrere Masken versandt werden.

Das zweite Verfahren bedient sich der Adressierung von Busteilnehmern durch ein zeitversetztes Anschließen an das Bussystem.

Während einer Initialisierungsphase, die unter Umständen extern getriggert wird, ist das Steuergerät bereits im Betrieb und die Sensoren werden in einer bestimmten Reihenfolge mit einem bestimmten zeitlichen Versatz an den Sensorbus angeschlossen. Der zeitliche Versatz muss mindestens so groß sein, dass das Steuergerät mit dem neu angeschlossenen Sensor eine Kommunikation aufbauen und dieser Sensor seine eindeutige Adresse an das Steuergerät übertragen kann. Wenn der Sensor sich am Bus angemeldet hat, stellt er die Kommunikation auf dem Bus ein, solange die Initialisierungsphase aktiv ist. Dann kann der nächste Sensor angeschlossen werden und sich am Sensorbus anmelden. Auf diese Weise kann das Steuergerät die Sensoren nacheinander identifizieren und bei Einhaltung einer vorgegebenen Reihenfolge beim Einbau auch einer bestimmten Position zuordnen. Die Sensoren können dann vom Steuergerät über ihre eindeutige Adresse angesteuert und die Signale positionsbezogen ausgewertet werden.

Bei besonders langen eindeutigen Adressen kann das Steuergerät optional den jeweiligen Sensoren eine logische Adresse zuweisen, die kürzer als die ursprüngliche eindeutige Adresse des Sensors ist. Damit wird der Protokoll-Overhead entlastet. Diese logische Adresse wird im Sensor abgespeichert. Mit der Änderung weiß der Sensor, dass er bereits am Sensorbus angemeldet ist. Bei Neustart des Systems kann ein Abgleich zwischen logischer Adresse und eindeutiger Adresse zwischen Steuergerät und Sensor stattfinden, so dass ein ausgetauschter Sensor erkannt wird. Wenn immer nur ein Sensor ausgetauscht wird, kann im Steuergerät die eindeutige Adresse des ausgetauschten Sensors durch diejenige des neuen Sensors ersetzt werden. Hierdurch ist keine erneute vollständige Initialisierungsphase für alle Sensoren notwendig.

Wenn die Sensoren vorteilhaft in einer definierten Reihenfolge entsprechend ihrer Position im Stoßfänger angeschlossen werden und diese Reihenfolge dem Steuergerät bekannt ist, kann das Steuergerät anhand der Reihenfolge, in der sich die Sensoren am Bus anmelden auf die Position der Sensoren im Stoßfänger zurück schließen. Somit ist mit diesem Verfahren auch eine geographische Adressierung möglich.

Optional ist es auch möglich Sensoren ohne interne eindeutige Adresse an den Sensorbus anzuschließen. In diesem Fall wird dem Sensor bei Anschluss an den Bus eine bestimmte logische Adresse zugewiesen, die im Sensor abgespeichert wird. Ein ausgetauschter Sensor wird erkannt, weil er noch keine logische Adresse bzw. eine Defaultadresse hat.

## Patentansprüche

1. Ultraschallbasiertes Fahrerassistenzsystem, insbesondere Einparkhilfe, mit mehreren Sensoren, wobei jeder Sensor eine Sender- und/oder eine Empfängereinheit, eine Schnittstelle zum Datenaustausch mit einem Steuergerät und einen auslesbaren Permanentdatenspeicher aufweist, wobei der Sensor mit einem Individuellen Identifikationscode belegt ist, wobei der Identifikationscode über die Schnittstelle vom Steuergerät auslesbar ist, wobei die Schnittstelle als Bus-Schnittstelle ausgebildet ist, die eine Kommunikation mit mehreren anderen Busteilnehmern ermöglicht, **dadurch gekennzeichnet, dass** die Schnittstelle eine 2-Draht-Busschnittstelle ist, die nach einer Periphere Sensor-Schnittstelle, Peripheral Sensor Interface PSI, ausgebildet ist, wobei in jedem Sensor ein Kondensator als lokale Energieressource vorgesehen ist, wobei mehr als vier gleichartige Sensoren, insbesondere sechs Sensoren, vorgesehen sind, die miteinander und mit dem Steuergerät über einen Datenleitungsbus aufweisend drei Leitungen verbunden sind, wobei der Datenleitungsbus aus zwei synchronisierten PSI-Systemen besteht.

2. System nach Anspruch 1, **dadurch gekennzeichnet, dass** eine der Leitungen für die Stromversorgung und zwei der Leitungen für die Datenübertragung vorgesehen sind.

3. System nach einem der vorangehenden Ansprüche, **dadurch gekennzeichnet, dass** die Sendeströme im jeweiligen Sensor über den Kondensator als lokale Energieressource gepuffert werden.

4. System nach einem der vorangehenden Ansprüche, **dadurch gekennzeichnet, dass** der Kondensator mithilfe von "Sync"-Pulsen nach dem PSI Protokoll zwischen zwei Sendepulsen aufgeladen werden kann.

5. System nach einem der vorangehenden Ansprüche, **dadurch gekennzeichnet, dass** die "Sync"-Pulse innerhalb eines Datenframes in kurzen Abständen gesendet werden, wobei die Anwesenheit eines "Sync"-Datenpulses die logische 1 und das Auslassen eines "Sync"-Datenpulses die logische 0 definieren.

6. Verfahren zur Initialisierung eines Systems nach einem der vorangehenden Ansprüche, insbesondere zur logischen Adressierung der im System vorhandenen Sensoren, wobei zur Identifikation die Identifikationscodes der einzelnen Sensoren abgefragt und in ursprünglicher oder geänderter Form im Steuergerät gespeichert werden, **dadurch gekennzeichnet, dass** die Identifikationscodes sukzessive abgefragt werden, indem eine Variable vorgegeben und deren Wert mit den in den Sensoren vorhandenen Codes verglichen wird, wobei bei Übereinstimmung der Code gespeichert wird und wobei bei Nichtübereinstimmung die Variable verändert, insbesondere inkrementiert wird.

7. Verfahren nach Anspruch 6, **dadurch gekennzeichnet, dass** die durch Initialisierung zugewiesene logische Adresse im Sensor abgespeichert wird.

## Claims

1. Ultrasound-based driver assistance system, in particular parking aid, having a plurality of sensors, each sensor having a transmitter unit and/or a receiver unit, an interface for interchanging data with a control device and a readable permanent data memory, the sensor being assigned an individual identification code, the identification code being able to be read by the control device via the interface, the interface being in the form of a bus interface which makes it possible to communicate with a plurality of other bus subscribers, **characterized in that** the interface is a two-wire bus interface which is designed according to a peripheral sensor interface PSI, a capacitor being provided as the local energy resource in each sensor, more than four identical sensors, in particular six sensors, being provided and being connected to one another and to the control device via a data line bus having three lines, the data line bus consisting of two synchronized PSI systems.

2. System according to Claim 1, **characterized in that** one of the lines is intended to supply power and two of the lines are intended to transmit data.

3. System according to one of the preceding claims, **characterized in that** the transmission currents in the respective sensor are buffered via the capacitor as the local energy resource.

4. System according to one of the preceding claims, **characterized in that** the capacitor can be charged with the aid of "sync" pulses according to the PSI protocol between two transmission pulses.

5. System according to one of the preceding claims, **characterized in that** the "sync" pulses within a data frame are transmitted at short intervals, the presence of a "sync" data pulse defining the logic 1 and the omission of a "sync" data pulse defining the logic 0.

6. Method for initializing a system according to one of the preceding claims, in particular for logically addressing the sensors in the system, the identification codes of the individual sensors being queried for the purpose of identification and being stored in the control device in the original or changed form, **characterized in that** the identification codes are successively queried by predefining a variable and comparing its value with the codes in the sensors, the code being stored if there is a match and the variable being changed, in particular incremented, if there is no match.

7. Method according to Claim 6, **characterized in that** the logical address allocated by initialization is stored in the sensor.

## Revendications

1. Système d'assistance au conducteur fonctionnant par ultrasons, en particulier auxiliaire de stationnement, présentant plusieurs capteurs, chaque capteur présentant une unité d'émission et/ou une unité de réception, une interface d'échange de données avec un appareil de commande et une mémoire dans laquelle des données permanentes peuvent être lues, le capteur étant doté d'un code individuel d'identification, le code d'identification pouvant être lu par l'appareil de commande par l'intermédiaire de l'interface, l'interface étant configurée comme interface de bus qui permet une communication avec plusieurs autres participants au bus,
**caractérisé en ce que**
l'interface est une interface de bus bifilaire configurée en interface pour capteur périphérique, interface pour capteur périphérique PSI,
**en ce qu'**un condensateur est prévu dans chaque capteur comme source locale d'énergie,
**en ce que** plus de quatre capteurs identiques, en particulier six capteurs, sont prévus et sont reliés les uns aux autres et à l'appareil de commande par un bus de conducteurs de données présentant trois conducteurs et
**en ce que** le bus de conducteur de données est constitué de deux systèmes PSI synchronisés.

2. Système selon la revendication 1, **caractérisé en ce que** l'un des conducteurs est prévu pour l'alimentation en courant et deux des conducteurs pour le transfert de données.

3. Système selon l'une des revendications précédentes, **caractérisé en ce que** les courants émis par chaque capteur sont tamponnés par l'intermédiaire du condensateur qui sert de source locale d'énergie.

4. Système selon l'une des revendications précédentes, **caractérisé en ce qu'**entre deux impulsions d'émission, le condensateur peut être chargé à l'aide d'impulsions de synchronisation selon le protocole PSI.

5. Système selon l'une des revendications précédentes, **caractérisé en ce que** les impulsions de synchronisation sont envoyées à de courts intervalles à l'intérieur d'une trame de données, la présence d'une impulsion de données de synchronisation définissant le 1 logique et l'absence d'une impulsion de données de synchronisation le 0 logique.

6. Procédé d'initialisation d'un système selon l'une des revendications précédentes, en particulier pour l'adressage logique des capteurs présents dans le système, les codes d'identification des différents capteurs étant demandés pour réaliser l'identification et étant conservés en mémoire dans l'appareil de commande sous la forme initiale ou sous une forme modifiée,
**caractérisé en ce que**
les codes d'identification sont demandés successivement en prédéterminant une variable et en comparant sa valeur aux codes présents dans les détecteurs,
**en ce que** la correspondance entre les codes est conservée en mémoire et
**en ce que** les variables sont modifiées et en particulier incrémentées en cas de non correspondance.

7. Procédé selon la revendication 6, **caractérisé en ce que** les adresses logiques attribuées par l'initialisation sont conservées en mémoire dans le capteur.
